# EUROPEAN PATENT APPLICATION

(11) **EP 3 872 357 A1**
(43) Date of publication of application: **01.09.2021**
(21) Application number: 20176186.3
(22) Date of filing: 22.05.2020
(51) Int. Cl.: F16B 37/04, B29C 45/00, B29C 45/14, B29L 7/00

(54) **COMPONENT ASSEMBLY**

(30) Priority: 27.02.2020 CN 202010910647
(71) Applicant: Boltun Corporation, Tainan City, Taiwan 71752 (CN)
(72) Inventor: WU, Rong-Bin, Tainan Country, Taiwan, 71842 (CN)
(74) Representative: Inchingalo, Simona

(57) **Abstract**

A component assembly (100, 100') includes a workpiece (2) and at least one elastic member(3). The workpiece (2) defines an axis (X), and has two ends opposite to each other along the axis (X), and an axial hole (221) extending through the ends. The at least one elastic member (3) is made of an elastic material and has a ring shape. The at least one elastic member (3) is disposed on and abuts against one of the ends of the workpiece (2), and surrounds the axial hole (221).

## Description

The disclosure relates to a component, more particularly to a component assembly suitable for embedding in a plastic substrate.

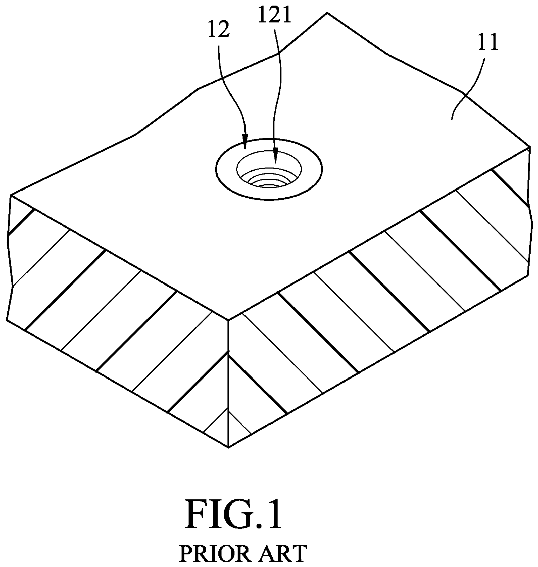

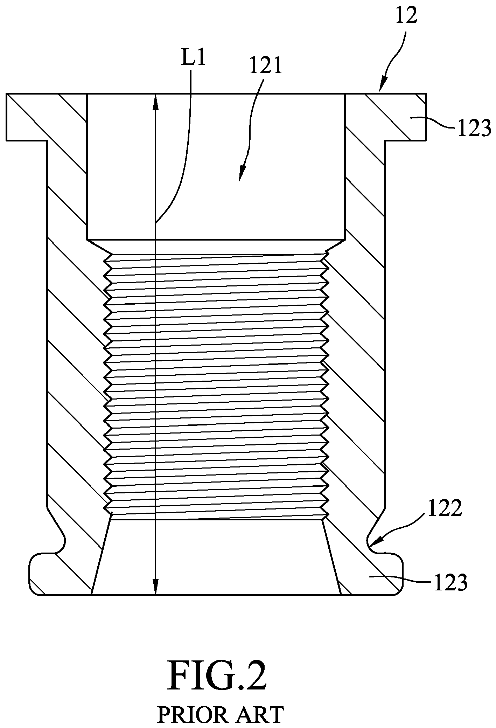

Referring to FIG. 1, many plastic substrates 11 are often used in the automotive industry. To facilitate connection of each plastic substrate 11 with other components, the plastic substrate 11 is embedded with one or more workpieces 12. Referring to FIG. 2, an existing workpiece 12 is made of metal, and is suitable for embedding in the plastic substrate 11. The workpiece 12 is cylindrical, and has an inner surface defining an axial hole 121 and formed with an internal thread in a central portion thereof. The workpiece 12 includes a deformable portion 122, and two outer annular flanges 123 extending outwardly, radially and respectively from top and bottom ends thereof.

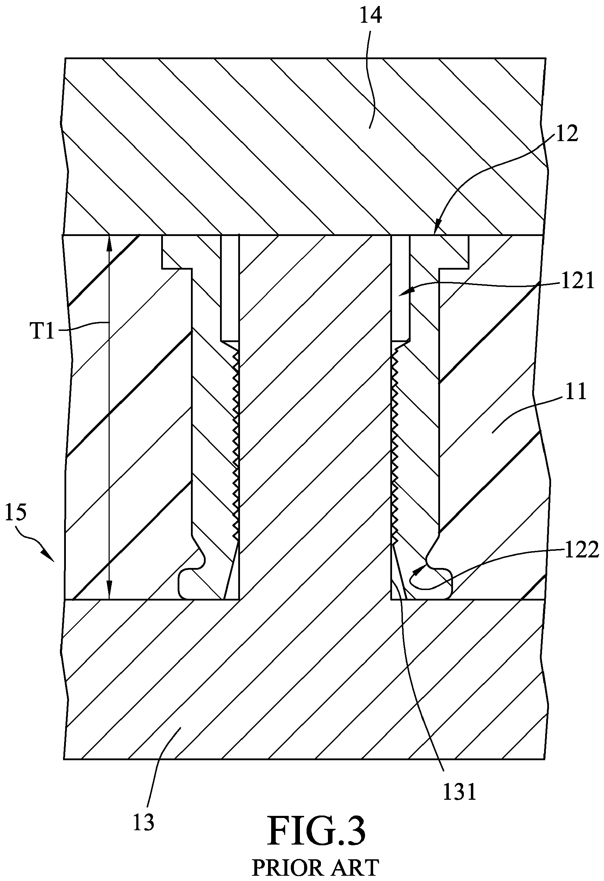

Referring to FIG. 3, the workpiece 12 is embedded in the plastic substrate 11 using a first mold 13 and a second mold 14. The first mold 13 includes a protruding post 131 protruding toward the second mold 14 for the workpiece 12 to sleeve thereon. When the first and second molds 13, 14 are closed, they can cooperatively define a space 15 for injection molding the plastic substrate 11. During the injection molding, to ensure that molten plastic will not flow into the threaded hole 121 of the workpiece 12, an axial length (L1) (see FIG. 2) of the workpiece 12 is designed to be longer than an axial length (T1) of the space 15. As such, when the first and second molds 13, 14 are closed and the workpiece 12 is compressed, the workpiece 12 will deform at the deformable portion 122 thereof and will abut tightly between the first and second molds 13, 14, thereby preventing the molten plastic to flow from the space 15 to the threaded hole 121.

However, since it is necessary for the first and second molds 13, 14 to press the workpiece 12 for a long time to deform the same, a portion of each of the first and second molds 13, 14 may be deformed and damaged.

Therefore, an object of the present disclosure is to provide a component assembly that is capable of alleviating at least one of the drawbacks of the prior art.

According to this disclosure, a component assembly includes a workpiece and at least one elastic member. The workpiece defines an axis, and has two ends opposite to each other along the axis, and an axial hole extending through the ends. The at least one elastic member is made of an elastic material and has a ring shape. The at least one elastic member is disposed on and abuts against one of the ends of the workpiece, and surrounds the axial hole.

Other features and advantages of the disclosure will become apparent in the following detailed description of the embodiments with reference to the accompanying drawings, of which:
FIG. 1 is a perspective sectional view of a plastic substrate embedded with an existing workpiece;
FIG. 2 is a sectional view of the existing workpiece;
FIG. 3 is a sectional view, illustrating how the existing workpiece can be embedded in the plastic substrate using a first mold and a second mold;
FIG. 4 is an exploded perspective view of a component assembly according to the first embodiment of the present disclosure;
FIG. 5 is an assembled sectional view of the first embodiment;
FIG. 6 is a fragmentary sectional view, illustrating the first embodiment disposed between a first mold and a second mold;
FIG. 7 is an enlarged sectional view of a portion of FIG. 6, illustrating an elastic member of the first embodiment being pressed and deformed by the second mold;
FIG. 8 is a sectional view, illustrating the first embodiment being embedded in a plastic substrate; and
FIG. 9 is a sectional view of a component assembly according to the second embodiment of the present disclosure.

Before the present disclosure is described in greater detail, it should be noted herein that like elements are denoted by the same reference numerals throughout the disclosure.

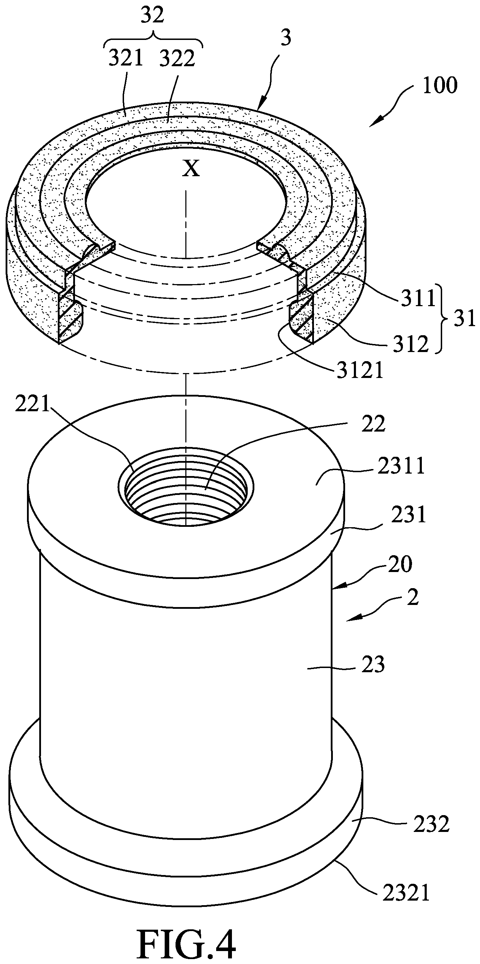

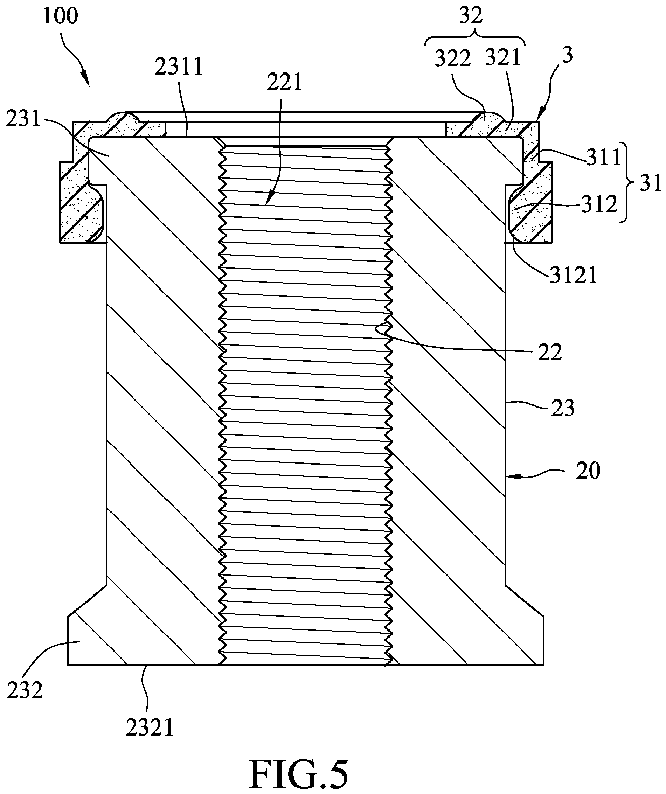

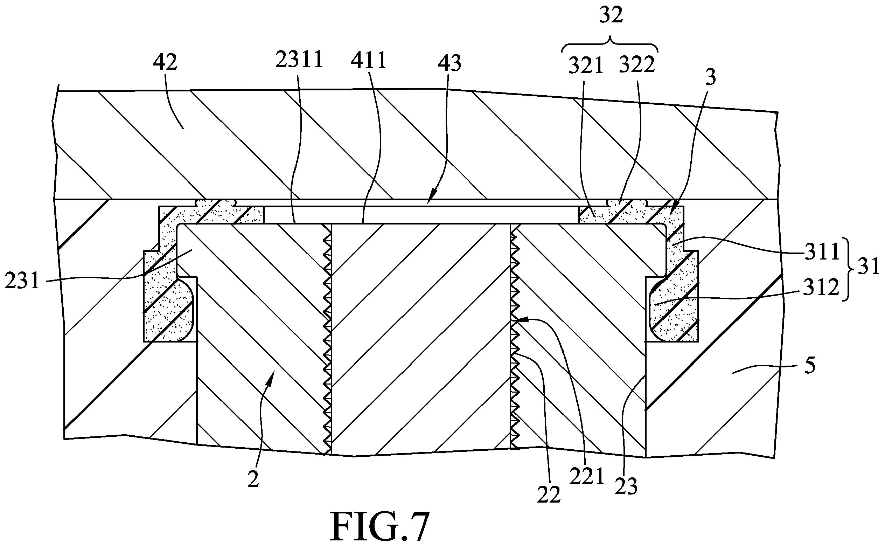

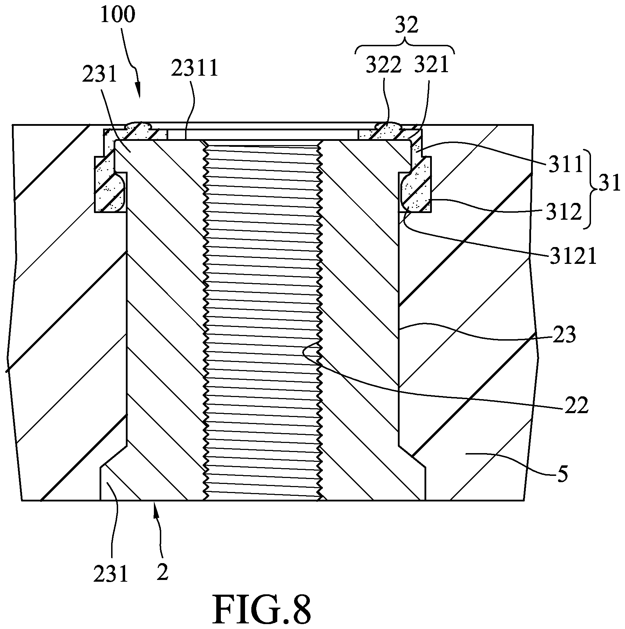

Referring to FIGS. 4 to 6, a component assembly 100 according to the first embodiment of the present disclosure is suitable for embedding in a plastic substrate 5 (see FIGS. 7 and 8), and includes a workpiece 2 and an elastic member 3.

The workpiece 2 is made of low carbon steel, and includes a main cylindrical body 20 defining an axis (X) and having two ends opposite to each other along the axis (X), an inner surface 22 and an outer surface 23 opposite to the inner surface 22; a first outer annular flange 231 provided on one of the ends of the main cylindrical body 20 and extending outwardly and radially from an upper peripheral end of the outer surface 23; and a second outer annular flange 232 provided on the other end of the main cylindrical body 20 and extending outwardly and radially from a lower peripheral end of the outer surface 23. The inner surface 22 defines an axial hole 221 extending through top and bottom ends thereof, and is formed with an internal thread. That is, the axial hole 221 is an axial threaded hole. However, in other embodiment, the axial hole 221 may be a blind hole, and the first and second outer annular flanges 231, 232 may have different shapes and sizes according to the requirement, and are not limited to what is disclosed herein.

The elastic member 3 is made of an elastic material, such as nylon, rubber, etc. In this embodiment, the elastic member 3 is made of nylon, is disposed on the first outer annular flange 231, and surrounds the axial hole 221 of the workpiece 2. The elastic member 3 has a ring shape, and includes a main ring body 31 and an inner annular flange 32. The main ring body 31 includes a sleeved portion 311 sleeved on an outer periphery of the first outer annular flange 231, and a securing portion 312 connected to a bottom periphery of the sleeved portion 311 and having an annular protrusion 3121 protruding inwardly and radially therefrom toward the outer surface 23 of the main cylindrical body 20. The annular protrusion 3121 has a semicircular cross section.

The inner annular flange 32 extends inwardly and radially from the main ring body 31, and includes a main flange body 321 abutting against an outer surface 2311 of the first outer annular flange 231, and an annular protrusion 322 protruding outwardly and axially from the main flange body 321 and opposite to the outer surface 2311 of the first outer annular flange 231. The annular protrusion 322 has a semicircular cross section.

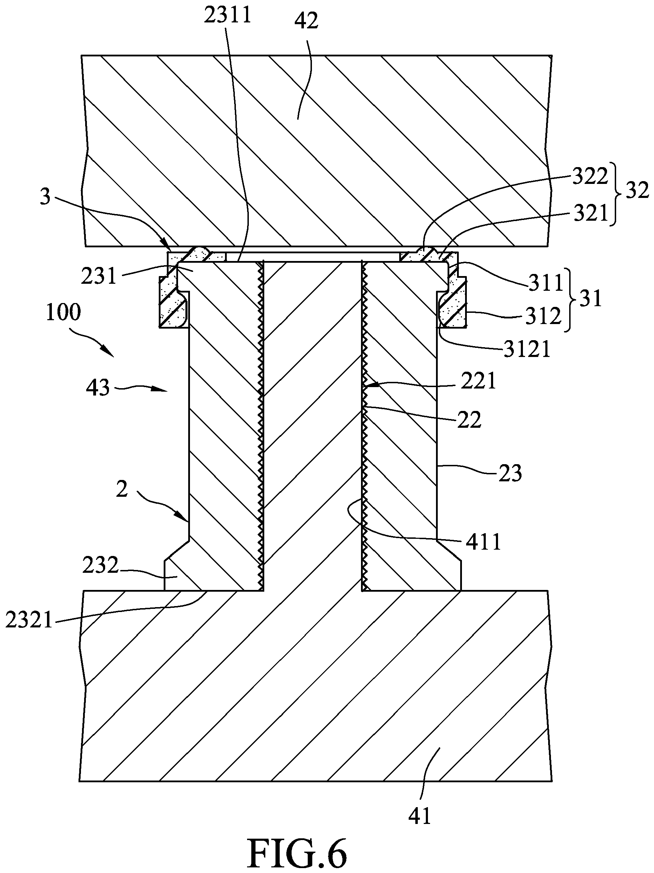

FIGS. 6 to 8 illustrate how the component assembly 100 is embedded in the plastic substrate 5 using a first mold 41 and a second mold 42. The first mold 41 includes a protruding post 411 protruding toward the second mold 42. During production, the component assembly 100 is first sleeved on the protruding post 411 of the first mold 41, after which the second mold 42 is moved close to the first mold 41 and cooperates with the same to define a space 43 for injection molding the plastic substrate 5. When the second mold 42 abuts against the annular protrusion 322 of the elastic member 3, and is moved further toward the first mold 41, it will press and deform the annular protrusion 322, as shown in FIG. 7. At this time, the elastic member 3 is pressed between the workpiece 2 and the second mold 42. Next, molten plastic is injected into the space 43, and is then cooled. After cooling, the second mold 42 is moved away from the first mold 41 to permit removal of the plastic substrate 5 with the embedded component assembly 100 from the first mold 41.

The first characteristic of the first embodiment is that, when the annular protrusion 322 of the elastic member 3 is pressed and deformed by the second mold 42 when the second mold 42 is moved toward the first mold 41 so that the first mold 41 and the second mold 42 are closed, the elastic member 3 is pressed between the workpiece 2 and the second mold 42, and the molten plastic in the space 43 can be effectively prevented from flowing into the axial hole 221 of the workpiece 2. The second characteristic of the first embodiment is that, since the elastic member 3 has elasticity and is relatively easy to deform, the second mold 42 is not easily damaged even if it presses the elastic member 3 for multiple times during repeated production.

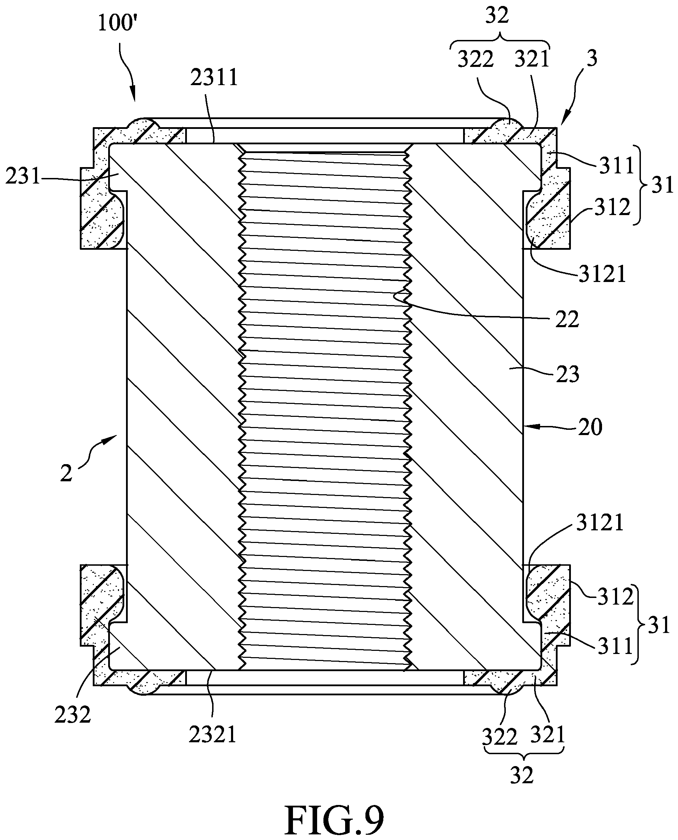

Referring to FIG. 9, the second embodiment of the component assembly 100' of this disclosure is shown to be identical to the first embodiment. However, in the second embodiment, the component assembly 100' includes two elastic members 3 respectively sleeved on the first outer annular flange 231 and the second outer annular flange 232 of the workpiece 2. The main flange body 321 of the inner annular flange 32 of the elastic member 3 that is sleeved on the second outer flange 232 abuts against an outer surface 2321 of the second outer annular flange 232. The characteristics of the first embodiment can be similarly achieved using the second embodiment.

In summary, the advantage of the component assembly 100, 100' of this disclosure resides in that: the elastic member 3 made of an elastic material and surrounding the axial hole 221 of the workpiece 2 can be pressed and deformed when the first and second molds 41, 42 are closed, so that the elastic member 3 can be pressed between the workpiece 2 and the second mold 42 to prevent the molten plastic in the space 43 to flow into the axial hole 221, and can protect the first and second molds 41, 42 from being damaged.

In the description above, for the purposes of explanation, numerous specific details have been set forth in order to provide a thorough understanding of the embodiments. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects.

## Claims

1. A component assembly (100, 100') comprising a workpiece (2) defining an axis (X) and having two ends opposite to each other along the axis (X), the workpiece (2) having an axial hole (221) extending through the ends thereof, **characterized by**:
at least one elastic member (3) disposed on and abutting against one of said ends of said workpiece (2) and surrounding said axial hole (221), said at least one elastic member (3) being made of an elastic material and having a ring shape.

2. The component assembly (100, 100') as claimed in Claim 1, wherein:
said workpiece (2) includes a main cylindrical body (20) defining said axis (X) and having an inner surface (22) and an outer surface (23) opposite to said inner surface (22), a first outer annular flange (231) provided on one of said ends of said workpiece (2) and extending outwardly and radially from an upper peripheral end of said outer surface (23), and a second outer annular flange (232) provided on the other one of said ends of said workpiece (2) and extending outwardly and radially from a lower peripheral end of said outer surface (23), said inner surface (22) having said axial hole (221); and
said at least one elastic member (3) includes a main ring body (31) sleeved on one of said first outer annular flange (231) and said second outer annular flange (232), and an inner annular flange (32) extending inwardly and radially from said main ring body (31) and surrounding said axial hole (221).

3. The component assembly (100, 100') as claimed in Claim 2, wherein said main ring body (31) includes a sleeved portion (311) sleeved on an outer periphery of said one of said first outer annular flange (231) and said second outer annular flange (232), and a securing portion (312) connected to said sleeved portion (311) and having an annular protrusion (3121) protruding inwardly and radially from said securing portion (312) toward said outer surface (23) of said main cylindrical body (20).

4. The component assembly (100, 100') as claimed in Claim 2, wherein said inner annular flange (32) includes a main flange body (321) abutting against an outer surface (2311, 2321) of said one of said first outer annular flange (231) and said second outer annular flange (232), and an annular protrusion (322) protruding outwardly and axially from said main flange body (321) and opposite to said outer surface (2311, 2321) of said one of said first outer annular flange (231) and said second outer annular flange (232).

5. The component assembly (100, 100') as claimed in Claim 2, wherein said inner surface (22) of said main cylindrical body (20) is formed with an internal thread, and said axial hole (221) is an axial threaded hole.

6. The component assembly (100, 100') as claimed in Claim 1, wherein said workpiece (2) is made of metal, and said at least one elastic member (3) is made of one of nylon and rubber.

7. The component assembly (100') as claimed in Claim 1, wherein said component assembly (100') includes two said elastic members (3) respectively disposed on and respectively abutting against said ends of said workpiece (2).
